# EUROPÄISCHE PATENTSCHRIFT

(11) **EP 1 795 401 B1**
(45) Veröffentlichungstag und Bekanntmachung des Hinweises auf die Patenterteilung: **23.04.2008**
(21) Anmeldenummer: 06122498.6
(22) Anmeldetag: 18.10.2006
(51) Int. Cl.: B60R 16/02, H02G 11/00

(54) **Vorrichtung zur drahtgebundenen Versorgung von insbesonderen flächigen, in einer Führung befindlichen verschieblichen Objekten mit elektrischer Energie**
Device for wired electrical energy supply of in particular flat objects slidably arranged in a guiding
Dispositif pour l'alimentation en énergie électrique en réseau câblé d'objets, en particulier d'objets plats, disposés de manière coulissante dans un guidage

(30) Priorität: 09.12.2005 DE 102005058989; 03.01.2006 DE 102006000710
(43) Veröffentlichungstag der Anmeldung: 13.06.2007
(73) Patentinhaber: COBRA electronic GmbH & Co. KG, 85053 Ingolstadt (DE)
(72) Erfinder: Kothmeier, Georg, 85051 Ingolstadt (DE)
(74) Vertreter: Kruspig, Volkmar

(56) Entgegenhaltungen:
- EP-A- 0 982 195
- EP-A1- 0 282 389
- DE-A1- 3 843 665
- US-A- 3 433 889

## Beschreibung

Die Erfindung betrifft eine Vorrichtung zur drahtgebundenen Versorgung von insbesondere flächigen, in einer Führung befindlichen verschieblichen Objekten, wie Schiebetüren, Platten, Scheiben, Dekorelementen oder dergleichen mit elektrischer Energie, wobei die Energie von einem oder mehreren stationären Einspeisepunkten zum energieverbrauchenden Objekt übertragen wird, gemäß Oberbegriff des Patentanspruchs 1.

Aus dem Bereich der Fahrzeugindustrie sind Stromzuführungen für z.B. Schiebetüren vorbekannt, wobei dort Einrichtungen zum Auf- und Abwickeln der stromzuführenden Kabel zur Anwendung kommen. Beispielsweise sei diesbezüglich auf die DE 102 50 150 A1 verwiesen.

Bei der automatischen Schiebetür nach DE 103 18 160 A1 ist mindestens ein verschiebbarer Flügel vorhanden, der betrieblich über ein Antriebsmittel gekuppelt ist, das von einem Antriebsmotor über eine Kupplung angetrieben wird, dergestalt, daß sich die Türflügel öffnen oder schließen lassen, wobei die Türflügel einen Rahmen aus Profilen aufweisen, in denen eine Glasscheibe gehalten wird und wobei zumindest in einem der Profile ein Leuchtmittel vorgesehen ist, das über eine Stromversorgung mit elektrischer Energie versorgt wird. Gemäß dortigem Ausführungsbeispiel kann der feststehende Teil von einer Führungsschiene gebildet werden, wobei der bewegbare Flügel in Längsrichtung der Führungsschiene verschiebbar an dieser gelagert ist. An der Führungsschiene ist eine stationäre Stromschiene und an dem verschiebbaren Flügel ein mitbewegter Stromabnehmer vorgesehen. Nachteilig bei dieser Ausführungsform ist die Tatsache, daß über den mechanischen Schiebekontakt die elektrische Verbindung zu realisieren ist mit der Problematik entstehender Übergangswiderstände und einer zusätzlichen Belastung der miteinander in Kontakt stehenden Oberflächen.

Ebenfalls ist aus der DE 103 18 160 A1 vorbekannt, daß sich die Stromschiene in Längsrichtung innerhalb der Führungsschiene erstreckt, was eine wassergeschützte Unterbringung der Stromschiene in der Führungsschiene darstellt.

Ebenfalls soll es nach der DE 103 18 160 A1 möglich sein, zwei parallel verlaufende Stromschienen an der Führungsschiene zu lagern, an denen zwei vorzugsweise hakenförmig gekrümmte Stromabnehmer gleitend geführt sind. Auch hier findet eine Reibbewegung zwischen den Stromschienen und den Stromabnehmern mit all den hierdurch resultierenden offensichtlichen Nachteilen statt.

Anstelle der Stromschiene soll nach der DE 103 18 160 A1 auch die Verwendung von Schleppkabeln erfolgen, wobei die Schleppkabel zu den verschiebbaren Flügeln führen und über ein stationäres Anschlußende verfügen.

Derartige Schleppkabel nehmen zum einen einen nicht unerheblichen Bauraum ein und müssen zum anderen über eine Aufroll- bzw. Abwickelvorrichtung verfügen. Insbesondere hohen ästhetischen Ansprüche genügt eine solche Stromzuführung mittels Schleppkabeln nicht. Die DE-A-3 843 665 zeigt die Merkmale des Oberbegriffs des unabhängigen Anspruchs 1.

Aus dem Vorgenannten ist es daher Aufgabe der Erfindung, eine weiterentwickelte Vorrichtung zur drahtgebundenen Versorgung von flächigen, in einer Führung befindlichen verschieblichen Objekten, wie Schiebetüren, Platten, Scheiben, Dekorelementen oder dergleichen mit elektrischer Energie anzugeben, wobei die Energie von einem oder mehreren stationären Einspeisepunkten zum energieverbrauchenden Objekt zu übertragen ist. Erfindungsgemäß soll die Vorrichtung so realisiert werden, daß keine spürbare Behinderung der mechanischen Verschiebebewegung durch die Stromversorgung eintritt. Die Versorgung soll darüber hinaus potentialfrei bezüglich üblicher Führungsprofile oder Führungsschienen erfolgen und zwischen den Führungsmitteln und den verschieblichen Objekten soll die dort bestehende Gleitverbindung nicht zusätzlich durch eine Stromübertragung belastet werden.

Letztendlich gilt es, mit der erfindungsgemäßen Vorrichtung eine Stromversorgung anzugeben, die mit minimalen geometrischen Abmessungen umgesetzt werden kann, so daß keine gestalterischen Nachteile oder Einschränkungen bestehen.

Die Lösung der Aufgabe der Erfindung erfolgt durch eine Vorrichtung gemäß der Merkmalskombination nach Patentanspruch 1, wobei die Unteransprüche mindestens zweckmäßige Ausgestaltungen und Weiterbildungen darstellen.

Bei der Vorrichtung zur drahtgebundenen Stromversorgung von flächigen, in einer Führung befindlichen verschieblichen Objekten, wie z.B. Schiebetüren, besteht die Führung aus einem an sich bekannten Hohlprofil mit einer schlitzförmigen Längsnut.

In der Längsnut ist ein oder sind mehrere Gleitkörper verschieblich aufgenommen, welche mit dem Objekt verbunden oder integraler Bestandteil des Objekts sind.

Innerhalb des Hohlprofils befindet sich in einer offenen Schleife verlegt eine Folienleiter-Anordnung, welche einerseits mit dem stationären Einspeisepunkt und andererseits mit dem Energieverbraucher kontaktiert ist, wobei zur Kontaktierung mit dem Verbraucher eine elektrische Verbindung über oder mit Hilfe des oder der Gleitkörper realisiert ist.

Die Folienleiter-Anordnung ermöglicht außerordentlich geringe Biegeradien, so daß das Führungsprofil nur über eine sehr geringe lichte innere Weite bzw. einen geringen Durchmesser verfügen muß. Dies erschließt völlig neue gestalterische Aspekte, z.B. bei verschieblichen Schranktüren in Möbeln, insbesondere Küchenmöbeln oder dergleichen.

Ausgestaltend besteht der Gleitkörper aus einem Isolierstoff mit leitfähigen Einlagen, wobei die Folienleiter-Anordnung an ihrem beweglichen Ende mit den leitfähigen Einlagen elektrisch kontaktiert ist.

Dabei ist ein Ende der jeweiligen leitfähigen Einlage zur Hohlprofil-Innenseite zum Zweck der Kontaktierung mit der Folienleiter-Anordnung orientiert, wobei das weitere Ende zum verschieblichen Objekt, z.B. einer Schrankschiebetür führt, um einen dort befindlichen Verbraucher, z.B. ein Leuchtmittel zu betreiben.

In einer weiteren Ausführungsform der Erfindung kann der Gleitkörper Ausnehmungen oder Durchbrüche zur unmittelbaren Aufnahme des beweglichen Endes der Folienleiter-Anordnung aufweisen, wobei die Anschlußenden der Folienleiter-Anordnung unmittelbar zum Verbraucher führen und mit diesem elektrisch verbunden sind.

Bei dieser Ausführungsvariante der Erfindung ist es nicht notwendig, daß der Gleitkörper selbst noch leitfähige Einlagen aufweisen muß, so daß sich die Gesamtkosten bei der Umsetzung der erfindungsgemäßen Vorrichtung reduzieren.

Der Gleitkörper kann weiterhin eine Kontaktklemme aufweisen, welche das bewegliche Ende der Folienleiter-Anordnung mechanisch fixiert und elektrisch kontaktiert. Durch diese, z.B. federbelastet ausgeführte Kontaktklemme ist der Vorgang der Montage der Vorrichtung wesentlich erleichtert.

Der Gleitkörper besitzt bei einer Ausgestaltung der Erfindung eine Aufnahme oder ein Befestigungsmittel zum Fixieren eines Leuchtkörpers, insbesondere einer lichtemittierenden Diode (LED) oder einer LED-Gruppe.

Dabei kann die LED oder die LED-Gruppe Strahlungsenergie beispielsweise in eine transparente Scheibe oder Platte einkoppeln, welche Bestandteil des verschieblichen Objekts oder auf diesem angeordnet ist.

Die Schenkel der offenen Schleife der Folienleiter-Anordnung verlaufen im wesentlichen zur Längsausrichtung des Hohlprofils parallel. Die zur Biegeschlaufen-Verformung notwendige mechanische Energie beim Verschieben des beweglichen Objekts ist derart gering, daß dies vom Nutzer nicht wahrgenommen wird, was einen wesentlichen Vorteil zu schwereren Schleppkabeln darstellt, wobei zusätzlich anzumerken ist, daß bei der erfindungsgemäßen Vorrichtung keinerlei Geräuschbildung, bedingt durch die Verschiebung oder Verformung der Folienleiter-Anordnung, auftritt.

Das Hohlprofil der Vorrichtung kann bei einer ersten Variante an einem stirnseitigen Ende eine Öffnung aufweisen, durch welche die Folienleiter-Anordnung zu ihrem stationären Einspeisepunkt geführt ist.

Bei einer zweiten Ausführungsform besteht die Möglichkeit, daß das Hohlprofil umfangsseitig eine z.B. schlitzartige Öffnung aufweist, durch welche die Folienleiter-Anordnung zu ihrem stationären Einspeisepunkt geführt wird.

Die Folienleiter-Anordnung ist bei einer bevorzugten Ausführungsform als flexible Leiterplatte mit mehrpoligen, isolierten Leiterzügen ausgeführt. Eine derartige flexible Leiterplatte läßt sich außerordentlich kostengünstig herstellen. Aufgrund der durch Kupferkaschierung realisierten Leiterbahnen kann, wenn notwendig, die elektrische Verbindung durch einen Lötvorgang realisiert werden.

Das Hohlprofil kann als Rohr oder als Mehrkantprofil, z.B. Vierkantprofil ausgeführt werden, wobei die lichte innere Weite im Bereich zwischen im wesentlichen 5 mm und <50 mm, bevorzugt zwischen 5 mm und 10 mm liegt.

Am Gleitkörper kann ausgestaltend ein Betätigungs- oder Schaltelement befindlich sein, um beim Erreichen oder Verlassen einer Endlage des verschieblichen Objekts die Stromversorgung herzustellen oder zu unterbrechen.

Dabei kann das Schaltelement als Aus- oder Einschalter im Sinne eines Tasters ausgeführt sein und sich selbst innerhalb des Gleitkörpers befinden.

Alternativ besteht die Möglichkeit, daß am Gleitkörper nur ein Betätigungselement vorhanden ist, das auf einen, z.B. Ruhestromschalter einwirkt, der am Ende des Verschiebewegs befestigt ist.

Bei der Erläuterung der Erfindung wurde zunächst davon ausgegangen, daß das Hohlprofil z.B. kämpferartig in einem z.B. Küchenelement befestigt ist, wobei am Gleitkörper eine Schrankschiebetür fixiert wird.

Es besteht selbstverständlich auch die Möglichkeit der kinematischen Umkehr dergestalt, daß der Gleitkörper an einem Möbelkorpus befestigt wird und eine Verschiebung des Hohlprofils erfolgt, wobei am Hohlprofil Befestigungsmittel zum Halten z.B. einer Schiebetür vorgesehen sind.

Die Erfindung soll nachstehend anhand eines Ausführungsbeispiels sowie unter Zuhilfenahme einer Figur näher erläutert werden.

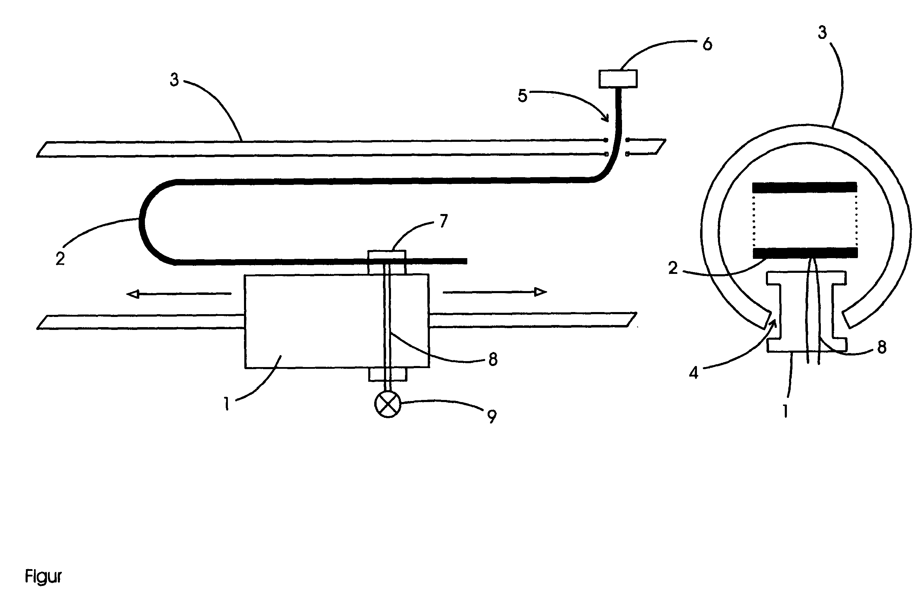

Die Figur zeigt hierbei einen Längsschnitt sowie eine Querschnittsdarstellung der erfindungsgemäßen Vorrichtung mit einem rohrförmigen Hohlprofil.

Das rohrförmige Hohlprofil 3 weist eine schlitzförmige Nut 4 auf, in welcher der Gleitkörper 1 verschiebebeweglich geführt ist.

Der Gleitkörper 1 besitzt beim gezeigten Beispiel gemäß der Figur eine DoppelT-Form und ist hierdurch gegen Herausfallen gesichert.

Im Inneren des Hohlprofils 3 befindet sich eine Folienleiter-Anordnung 2, und zwar in einer schlaufenförmigen Verlegung mit im wesentlichen parallelem Verlauf der entsprechenden Schenkel des Folienleiters.

Über eine schlitzförmige Öffnung 5 im Hohlprofil 3, bevorzugt an einem Ende dieses, wird die Folienleiter-Anordnung 2 zu ihrem stationären Einspeisepunkt 6 geführt.

Das bewegliche Ende der Folienleiter-Anordnung 2 kann mit Hilfe einer Kontaktklemme 7 am Gleitkörper 1 mechanisch und elektrisch befestigt bzw. kontaktiert werden.

Im Gleitkörper 1 befindet sich eine leitfähige Einlage 8, welche beispielsweise mit einem Leuchtmittel 9 in Verbindung steht.

Das Leuchtmittel kann als lichtemittierende Diode ausgeführt sein.

Figürlich nicht dargestellt sind am Gleitkörper 1 Mittel zum Befestigen z.B. einer Glasscheibe als Schiebetür oder Schiebewand vorgesehen. Diese Befestigungsmittel können beispielsweise eine Aufnahmenut mit Klemmschrauben oder dergleichen umfassen.

Alternativ zu der Kontaktierung des beweglichen Endes der Folienleiter-Anordnung 2 über eine Kontaktklemme 7 kann dieses bewegliche Ende auch unmittelbar zum elektrischen Verbraucher führen und dort kontaktiert werden, d.h. bei einer solchen Ausführungsform ist es nicht notwendig, im Gleitkörper 1 leitfähige Einlagen 8 vorzusehen.

Das Hohlprofil 3 weist nur eine sehr geringe innere lichte Weite bzw. nur einen kleinen Durchmesser auf. Es ist hierbei von Vorteil, daß die Folienleiter-Anordnung, ausgeführt als flexible Leiterplatte, einen geringen Biegeradius im Schlaufenbereich ermöglicht. Damit kann die gesamte Stromzuführung im Inneren des Hohlprofils 3 befindlich sein, wodurch sich gestalterische Vorteile ergeben.

### Bezugszeichenliste

- 1: Gleitkörper
- 2: Folienleiter-Anordnung
- 3: Hohlprofil
- 4: Nut
- 5: Öffnung
- 6: stationärer Einspeisepunkt
- 7: Kontaktklemme
- 8: leitfähige Einlage
- 9: Leuchtmittel bzw. Verbraucher

## Patentansprüche

1. Vorrichtung zur drahtgebundenen Versorgung von insbesondere flächigen, in einer Führung befindlichen verschieblichen Objekten, wie Schiebetüren, Platten, Scheiben, Dekorelementen oder dergleichen, mit elektrischer Energie, wobei die Energie von einem oder mehreren stationären Einspeisepunkten zum energieverbrauchenden Objekt übertragen wird, wobei
die Führung als Hohlprofil mit einer schlitzförmigen Längsnut (4) ausgebildet ist
und in der Längsnut (4) ein oder mehrere Gleitkörper (1) verschieblich aufgenommen sind, welche mit dem Objekt verbunden werden oder integraler Bestandteil des Objekts selbst sind,
**dadurch gekennzeichnet dass**
innerhalb des Hohlprofils (3) in einer offener Schleife verlegt eine Folienleiter-Anordnung (2) befindlich ist, welche einerseits mit dem stationären Einspeisepunkt (6) und andererseits mit dem Energieverbraucher (9) kontaktiert ist, wobei zur Kontaktierung mit dem Verbraucher (9) eine elektrische Verbindung über oder mit Hilfe des oder der Gleitkörper (1) realisiert und die Folienleiter-Anordnung (2) eine flexible Leiterplatte mit mehrpoligen, isolierten Leiterzügen ist sowie das Hohlprofil (3) als Rohr oder Mehrkant ausgeführt ist, wobei die lichte innere Weite im Bereich zwischen 5 mm und < 50 mm, bevorzugt zwischen 5 mm und 10 mm liegt.

2. Vorrichtung nach Anspruch 1,
**dadurch gekennzeichnet, dass**
der Gleitkörper (1) aus einem Isolierstoff mit leitfähigen Einlagen besteht, wobei die Folienleiter-Anordnung (2) an ihrem beweglichen Ende mit den leitfähigen Einlagen elektrisch kontaktiert ist.

3. Vorrichtung nach Anspruch 1,
**dadurch gekennzeichnet, dass**
der Gleitkörper (1) Ausnehmungen oder Durchbrüche zur Aufnahme des beweglichen Endes der Folienleiter-Anordnung (2) aufweist, wobei die Anschlußenden der Folienleiter-Anordnung (2) unmittelbar zum Verbraucher (9) führen und mit diesem elektrisch verbunden sind.

4. Vorrichtung nach Anspruch 2,
**dadurch gekennzeichnet, daß**
der Gleitkörper (1) eine Kontaktklemme aufweist, welche das bewegliche Ende der Folienieiter-Anordnung (2) mechanisch fixiert und elektrisch kontaktiert.

5. Vorrichtung nach einem der vorangegangenen Ansprüche,
**dadurch gekennzeichnet, dass**
der Gleitkörper (1) eine Aufnahme zur Befestigung eines Leuchtmittels, insbesondere einer lichtemittierenden Diode (LED) oder einer LED-Gruppe aufweist.

6. Vorrichtung nach Anspruch 5,
**dadurch gekennzeichnet, dass**
die LED oder die LED-Gruppe Strahlungsenergie in eine transparente Scheibe oder Platte einkoppelt, welche Bestandteil des verschieblichen Objekts oder dieses selbst ist.

7. Vorrichtung nach einem der vorangegangenen Ansprüche,
**dadurch gekennzeichnet, dass**
die Schenkel der offenen Schleife der Folienleiter-Anordnung (2) im wesentlichen parallel zur Längsrichtung des Hohlprofils (3) in dessen Inneren verlaufen.

8. Vorrichtung nach einem der vorangegangenen Ansprüche,
**dadurch gekennzeichnet, dass**
an einem stirnseitigen Ende das Hohlprofil (3) eine Öffnung aufweist, durch welche die Folienleiter-Anordnung (2) zu ihrem stationären Einspeisepunkt geführt ist.

9. Vorrichtung nach einem der Ansprüche 1 bis 7,
**dadurch gekennzeichnet, dass**
das Hohlprofil (3) umfangsseitig eine Öffnung aufweist, durch welche die Folienleiter-Anordnung (2) zu ihrem stationären Einspeisepunkt geführt ist.

10. Vorrichtung nach einem der vorangegangenen Ansprüche,
**dadurch gekennzeichnet, dass**
am Gleitkörper (1) ein Betätigungs- oder Schaltelement befindlich ist, um beim Erreichen oder Verlassen einer Endlage des verschieblichen Objekts die Stromversorgung herzustellen oder zu unterbrechen.

## Claims

1. Device for the wired electrical energy supply of in particular flat objects slidably arranged in a guide, such as sliding doors, plates, panes, decorative elements or the like, wherein the energy is transferred from one or more stationary feeding points to the energy-consuming object, wherein
the guide is formed as a hollow section with a slot-shaped longitudinal groove (4), and one or more sliding members (1) are slidably received in the longitudinal groove (4), which are connected to the object or form an integral part of the object,
**characterized in that**
a foil conductor assembly (2) laid in an open loop is located inside the hollow section (3), which is in contact with the stationary feeding point (6) on the one hand and with the energy consumer (9) on the other hand, wherein, to establish contact with the consumer (9), an electrical connection is realized via or by means of the sliding member(s) (1) and the foil conductor assembly (2) is a flexible circuit board with multi-pin insulated conductor tracks and the hollow section (3) is embodied as a tube or polygon, with the internal diameter being in the range between 5 mm and < 50 mm, preferably between 5 mm and 10 mm.

2. Device according to claim 1,
**characterized in that**
the sliding member (1) is made of an insulating material with conductive inserts, wherein the foil conductor assembly (2) is in electrical contact with the conductive inserts on its mobile end.

3. Device according to claim 1,
**characterized in that**
the sliding member (1) includes recesses or through holes for receiving the mobile end of the foil conductor assembly (2), wherein the connecting ends of the foil conductor assembly (2) lead directly to the consumer (9) and are electrically connected to the same.

4. Device according to claim 2,
**characterized in that**
the sliding member (1) has a contact terminal which mechanically fixes and electrically contacts the mobile end of the foil conductor assembly (2).

5. Device according to one of the preceding claims,
**characterized in that**
the sliding member (1) includes a receptacle for fixing an illuminating means, specifically a light-emitting diode (LED) or an LED-group.

6. Device according to claim 5,
**characterized in that**
the LED or the LED-group launches radiant energy into a transparent pane or plate which forms part of the slidable object or is the slidable object.

7. Device according to one of the preceding claims,
**characterized in that**
the legs of the open loop of the foil conductor assembly (2) extend substantially parallel with respect to the longitudinal direction of the hollow section (3) in the interior thereof.

8. Device according to one of the preceding claims,
**characterized in that**
the hollow section (3) has an opening on a front end, through which the foil conductor assembly (2) is guided to its stationary feeding point.

9. Device according to one of claims 1 to 7,
**characterized in that**
the hollow section (3) has an opening on its periphery, through which the foil conductor assembly (2) is guided to its stationary feeding point.

10. Device according to one of the preceding claims,
**characterized in that**
an actuating or switching element is located on the sliding member (1) so as to produce or break the power supply when the slidable object reaches or leaves a final position.

## Revendications

1. Dispositif pour l'alimentation électrique en réseau câblé d'objets, en particulier d'objets surfaciques en translation qui se trouvent dans un guidage, comme des portes coulissantes, des plaques, des vitres, des éléments décoratifs ou similaires, dans lequel l'énergie est transmise depuis un ou plusieurs points d'alimentation stationnaires vers l'objet qui consomme cette énergie,
dans lequel le guidage est réalisé sous forme de profilé creux avec une gorge longitudinale (4) en forme de fente et un ou plusieurs coulisseaux (1) sont reçus en coulissement dans la gorge longitudinale (4), lesdits coulisseaux étant reliés à l'objet ou faisant eux-mêmes partie intégrante de l'objet,
**caractérisé en ce que**
à l'intérieur du profilé creux (3) se trouve un agencement à film conducteur (2) posé en une boucle ouverte, qui est mis en contact d'une part avec le point d'alimentation stationnaire (6) et d'autre part avec le dispositif consommateur d'énergie (9), et
pour la mise en contact avec le dispositif consommateur (9), il est réalisé une liaison électrique via le ou les coulisseau(x) (1) ou à l'aide de celui-ci/ceux-ci, et l'agencement à film conducteur (2) est une carte à circuits flexible avec des pistes conductrices isolées multipolaires, et le profilé creux (3) est réalisé sous forme de tube ou de profilé polygonal, la largeur intérieure libre étant dans la plage entre 5 mm et < 50 mm, de préférence entre 5 mm et 10 mm.

2. Dispositif selon la revendication 1,
**caractérisé en ce que** le coulisseau (1) est réalisé en un matériau isolant avec des inserts conducteurs, l'agencement à film conducteur (2) étant mis en contact électrique à son extrémité mobile avec les inserts conducteurs.

3. Dispositif selon la revendication 1,
**caractérisé en ce que** le coulisseau (1) présente des évidements ou des traversées pour recevoir l'extrémité mobile de l'agencement à film conducteur (2), et les extrémités de raccordement de l'agencement à film conducteur (2) mènent directement au dispositif consommateur (9) et sont raccordées électriquement à celui-ci.

4. Dispositif selon la revendication 2,
**caractérisé en ce que** le coulisseau (1) comprend une borne de contact qui fixe mécaniquement et qui met en contact électrique l'extrémité mobile de l'agencement à film conducteur (2).

5. Dispositif selon l'une des revendications précédentes,
**caractérisé en ce que** le coulisseau (1) comporte un logement pour fixer un élément lumineux, en particulier une diode électroluminescente (DEL) ou un groupe de DEL.

6. Dispositif selon la revendication 5,
**caractérisé en ce que** la DEL ou le groupe de DEL injecte l'énergie de rayonnement dans une vitre ou une plaque transparente, qui fait partie intégrante de l'objet en translation ou qui est cet objet lui-même.

7. Dispositif selon l'une des revendications précédentes,
**caractérisé en ce que** les branches de la boucle ouverte de l'agencement à film conducteur (2) s'étendent sensiblement parallèlement à la direction longitudinale du profilé creux (3) à l'intérieur de celui-ci.

8. Dispositif selon l'une des revendications précédentes,
**caractérisé en ce que** le profilé creux (3) présente une ouverture à une extrémité côté frontale, à travers laquelle est guidé l'agencement à film conducteur (2) vers son point d'alimentation stationnaire.

9. Dispositif selon l'une des revendications 1 à 7,
**caractérisé en ce que** le profilé creux (3) présente du côté périphérie une ouverture à travers laquelle est guidé l'agencement à film conducteur (2) vers son point d'alimentation stationnaire.

10. Dispositif selon l'une des revendications précédentes,
**caractérisé en ce qu'**un élément d'actionnement ou de commutation se trouve sur le coulisseau (1) afin d'établir ou d'interrompre l'alimentation électrique lorsque l'objet en translation atteint ou quitte une position finale.
